# EUROPÄISCHE PATENTANMELDUNG

(11) **EP 1 452 976 A2**
(43) Veröffentlichungstag der Anmeldung: **01.09.2004**
(21) Anmeldenummer: 03010248.7
(22) Anmeldetag: 07.05.2003
(51) Int. Cl.: G06F 17/30

(54) **Echtzeitwartung einer relationalen Datenbank**

(30) Priorität: 27.02.2003 DE 10308851
(71) Anmelder: Software Engineering GmbH, 40470 Düsseldorf (DE)
(72) Erfinder: Klosterhalfen, Jörg, 50823 Köln (DE); Smets, Heinz-Dieter, 41372 Niederkrüchten (DE)
(74) Vertreter: COHAUSZ & FLORACK

(57) **Zusammenfassung**

Die Erfindung betrifft ein Verfahren zur zeitnahen Wartung von Datenbankinhalten, insbesondere von Dateien (Data Sets), einer relationalen Datenbank, insbesondere DB2. Durch ein Verfahren, bei welchem mit Hilfe einer datenbankintegrierten Zustandsüberwachung Zustände der Datenbankinhalte erfasst werden, bei welchem Zustandsdaten der erfassten Zustände mit Hilfe der datenbankintegrierten Zustandsüberwachung zeitnah ausgegeben werden, bei welchem die ausgegebenen Zustandsdaten analysiert und mit Vergleichsdaten verglichen werden und bei welchem Wartungsfunktionen im Wesentlichen unmittelbar nach einem positiven Vergleichsergebnis aktiviert werden, wird eine durchgängige Verfügbarkeit bei gleichzeitiger kontinuierlicher Wartung einer relationalen Datenbank zur Verfügung gestellt.

## Beschreibung

Die Erfindung betrifft ein Verfahren zur zeitnahen Wartung von Datenbankinhalten, insbesondere von Dateien (Data Sets), einer relationalen Datenbank, insbesondere DB2. Die Erfindung betrifft darüber hinaus eine Vorrichtung eingerichtet zur Durchführung eines solchen Verfahrens, ein Computerprogramm für ein solches Verfahren und ein Computerprogrammprodukt mit einem solchen Verfahren.

Die Erfindung betrifft das Gebiet der relationalen Datenbanken, insbesondere der Datenbank DB2 von International Business Machines (IBM), auf dem Betriebssystem OS/390 oder z/OS, andere Betriebssysteme sind ebenfalls inbegriffen. Bei einer relationalen Datenbank wie der DB2 von IBM werden die Daten in einer Vielzahl von Indizes und Tabellen verwaltet. Die Daten selbst sind physikalisch durch Data Sets repräsentiert und auf einem Speichermedium abgelegt. Die Position, Struktur und Grösse der Data Sets wird beim Betrieb der Datenbank durch Lese-/Schreibzugriffe verändert. Die Datenbank greift auf Data Sets zu und verändert diese dadurch sowohl benutzergesteuert als auch aufgrund interner Arbeitsvorschriften. Aufgrund der Änderungen sind an den Data Sets Wartungsarbeiten für die Realisierung besserer Zugriffszeiten und Wiederherstellungszeiten notwendig. Die Datenbanken halten für solche Wartungsarbeiten integrierte Wartungsfunktionen (Werkzeuge) bereit, mit deren Hilfe Wartungsarbeiten an den Data Sets durchgeführt werden können.

Bei der Wartung sind verschiedene Werkzeuge von Bedeutung. Das ist zum einen die Sicherung der Data Sets, die ein Wiederherstellen der Daten ermöglicht. Dies ist dann notwendig, wenn die Daten aufgrund von Fehlfunktionen der Maschine, des Betriebsystems oder der Datenbank selbst oder aufgrund von fehlerhaften Programmen oder fehlerhaften Benutzereingaben korrupt oder verlustig sind. Ein notwendiges Sichern der Daten wird durch ein Datenbankwerkzeug ermöglicht.

Darüber hinaus ist die Reorganisation der Daten wichtig. Durch den Betrieb der Datenbank verschiebt diese aufgrund von internen Bearbeitungsregeln die Daten innerhalb der Data Sets, um einen schnellen Zugriff auf die Daten zu gewährleisten. Die Verschiebung erfolgt vorzugsweise nach logischen Kriterien, so dass zueinander gehörige Daten auch physikalisch nebeneinander gespeichert werden. Nach längerer Betriebsdauer ist eine gute Organisation der Daten jedoch durch eine Vielzahl von Verschiebungsoperationen nicht mehr gewährleistet. Die Datenbank hat durch das betriebsbedingte Umorganisieren einen Zustand der Unordnung geschaffen, der schnelle Zugriffszeiten auf die Daten verhindert. Um diese wieder gewährleisten zu können, müssen die Daten ab einem gewissen Grad der Unordnung wieder reorganisiert werden. Auch hierzu stellt die Datenbank ein eigenes Werkzeug zur Verfügung.

Auch ist das Sammeln von Statistiken über den Zustand der Daten innerhalb der Data Sets eine wichtige Aufgabe innerhalb von Datenbanken. Bei Abfrage von Daten durch eine Anwendung ermittelt die Datenbank die optimale Zugriffsstrategie auf die Daten mit Hilfe dieser Statistiken. Durch die Statistiken ist ein Einblick in den internen Ablauf der Datenbank möglich.

Bei DB2 sind obige Werkzeuge COPY, REORG und RUNSTATS. Aber auch weitere Werkzeuge sind bei der Durchführung der Wartungen an den Data Sets möglich. Bei DB2 sind dies insbesondere die Werkzeuge MODIFY und QUIESCE.

Zur Durchführung der Wartungsarbeiten werden die Werkzeuge mit Hilfe der dafür bestimmten Befehle aktiviert. Die Befehle werden in Stapeldateien (Batch Jobs), die der sogenannten Job Control Language (JCL) unterliegen, abgelegt und abgearbeitet, wenn die Datenbank nicht ausgelastet ist. Aufgrund der ständigen Veränderung der Zahl und Inhalt der Data Sets ist es notwendig, dass die Befehle dynamisch erstellt werden und an den jeweils bestehenden Datenstand angepasst werden.

Bei herkömmlichen relationalen Datenbanken werden die Zustände der Data Sets mit Hilfe externer Programme ermittelt und mit Hilfe der ermittelten Zustände die notwendigen Werkzeuge für die Wartung mit den entsprechenden Befehlen aktiviert. Die Überwachung der Zustände mit Hilfe externer Programme hat den Nachteil, dass diese die Systemleistung negativ beeinflussen, da diese Überwachungsprogramme viele Systemressourcen benötigen. Darüber hinaus sind diese Programme fehleranfällig, da sie auf die bestehende Datenbank aufsetzen und nicht in diese integriert sind. Bei Änderungen der Datenbankfunktionen und Strukturen müssen die externen Programme daran angepasst werden.

Es ist das Bestreben von Datenbankbetreibern, eine hohe Verfügbarkeit der Datenbanken 24 Stunden am Tag für sieben Tage die Woche bereit zu stellen. Eine 24x7 Verfügbarkeit von Datenbanken im Großrechnerbereich bedeutet durchgängig gute Antwortzeiten (etwa durch zeitnahe Reorganisationen und zeitnahes Sammeln von Statistiken für stets optimierten Datenzugriff), stetige Vermeidung von Fehlern (durch zeitnahes Reagieren auf kritische Situationen), schnelle Recovery-Zeiten bei Störungen(etwa durch zeitnahe Sicherungen), sowie eine nur unwesentliche Beeinträchtigung der Anwendungen durch Wartungsarbeiten. Dies erfordert jedoch, dass die Überwachung und die Wartung der Datenbank in nahezu Echtzeit erfolgt. Aufgrund der intensiven Systemauslastung durch die externen Überwachungsprogramme können diese nicht andauernd die Datenbank überwachen. Darüber hinaus führt die periodische Überwachung der Datenbank durch die externen Programme, die heutzutage in Perioden von vielen Stunden bzw. Tagen durchgeführt wird, dazu, dass danach eine Vielzahl von Wartungsarbeiten anstehen. Nach den Überwachungsläufen werden die Befehle für die Werkzeuge generiert und in einer Datei für die Stapelverarbeitung abgelegt. Die Datei wird anschliessend an einen Job Scheduler übergeben. Der Job Scheduler ist so eingestellt, dass er die Wartungsbefehle in bestimmten Zeitfenstern aktiviert, die für die Wartung reserviert sind und danach die Abarbeitung der Befehle überwacht. Durch die Vielzahl von Wartungsarbeiten in diesen Zeitfenstern dürfen Anwendungen nicht oder nur eingeschränkt auf der Datenbank arbeiten. Vorrangig haben die Wartungswerkzeuge den Zugriff auf die Datenbankinhalte. Das allerdings führt dazu, dass die Datenbank nicht immer uneingeschränkt zur Verfügung steht und die Anwendungen zu manchen Zeiten keinen Zugriff auf die Daten haben.

Der Erfindung liegt somit das technische Problem zugrunde, die durchgängige Verfügbarkeit bei gleichzeitiger kontinuierlicher Wartung einer relationalen Datenbank zur Verfügung zu stellen.

Das zuvor hergeleitete technische Problem wird erfindungsgemäß durch ein Verfahren zur zeitnahen Wartung von Datenbankinhalten, insbesondere von Dateien (Data Sets), einer relationalen Datenbank, insbesondere DB2, gelöst, bei welchem mit Hilfe einer datenbankintegrierten Zustandsüberwachung Zustände der Datenbankinhalte erfasst werden, bei welchem Zustandsdaten der erfassten Zustände mit Hilfe der datenbankintegrierten Zustandsüberwachung zeitnah ausgegeben werden, bei welchem die ausgegebenen Zustandsdaten analysiert und mit Vergleichsdaten verglichen werden und bei welchem Wartungsfunktionen im Wesentlichen unmittelbar nach einem positiven Vergleichsergebnis aktiviert werden.

Mit Hilfe der datenbankintegrierten Überwachung, die im Falle der DB2 als Real Time Statistics (RTS) realisiert ist, ist eine laufende Überwachung der Zustände der Data Sets bei geringer Systembelastung möglich. Die RTS externalisiert die gesammelten Zustandsdaten in einstellbaren Intervallen in dafür vorgesehene Tabellen.

Die Intervalle werden erfindungsgemäß klein eingestellt, so dass eine zeitnahe Ausgabe der Zustandsdaten ermöglicht wird. Zeitnah umfasst einen Zeitraum von wenigen Minuten bis hin zu einigen Stunden. So ist beispielsweise eine Ausgabe nach 30 Minuten bzw. nach 1 Stunde vorteilhaft. Erfindungsgemäß sind jedoch auch grössere bzw. kleiner Zeiträume möglich. Dies ist abhängig von den Anforderungen an die Datenbank bezüglich Sicherung, Datenreorganisation bzw. Sammeln von Statistiken über Daten.

Die ausgegebenen Zustandsdaten werden erfindungsgemäß unmittelbar ausgewertet und die Befehle zur Aktivierung der notwendigen Werkzeuge bei Bedarf erstellt. Dies hängt vom Zustand der Data Sets ab. Um erkennen zu können, ob eine Wartung angezeigt ist oder nicht, werden die Zustandsdaten mit Vergleichsdaten verglichen. Die Vergleichsdaten können Grenzwerte vorgeben, die einen Zustand beschreiben, zu dem das Ausführen eines Werkzeugs auf dem jeweiligen Data Set als notwendig erachtet wird.

Erfindungsgemäß wird der notwendige Befehl unmittelbar bei Erreichen eines bestimmten Vergleichswert erstellt und die Wartungsfunktion aktiviert.

Durch die zeitnahe, datenbankintegrierte Überwachung der Zustände werden notwendige Wartungsarbeiten sofort erkannt und können unmittelbar ausgeführt werden. Dies führt zu einer im Wesentlichen gleichmäßigen Belastung der Datenbank mit Wartungsarbeiten und die Datenbankinhalte stehen laufend für die damit arbeitenden Anwendungen zur Verfügung. Es ist nicht mehr notwendig, Wartungsfenster zu definieren, zu denen die Wartungsfunktionen arbeiten und die Anwendungen keinen Zugriff auf die Daten haben. Jedoch wird daneben auch gewährleistet, dass der Zustand der Daten immer den vorgegebenen Kriterien entspricht und somit bspw. Fehler in den Daten oder lange Zugriffszeiten vermieden werden können.

Häufig ist eine Wartung von Data Sets nur notwendig, wenn ein kritischer Zustand erreicht wurde. Daher wird vorgeschlagen, dass die Vergleichsdaten Zustandsschwellwerte von Datenzuständen repräsentieren. Diese Zustandsschwellwerte geben an, ab wann Daten mit Hilfe geeigneter Werkzeuge gewartet werden müssen. Erreicht der ermittelte Zustand eines Data Sets den bestimmten Zustandsschwellwert, kann die Wartung unmittelbar mit Hilfe eines geeignet generierten Befehls aktiviert werden.

Verschiedene Data Sets bzw. Gruppen von Data Sets unterliegen verschiedenen Anforderungen bezüglich ihres Zustandes. Daher wird vorgeschlagen, dass für Data Sets bzw. Gruppen von Data Sets verschiedene Schwellwerte festgelegt werden können. Auch ist es möglich, das unterschiedliche Wartungsfunktionen bei unterschiedlichen Datenzuständen angezeigt sind, so dass vorgeschlagen wird, unterschiedliche Zustandsschwellwerte für verschiedene Wartungsfunktionen einzustellen.

Der Zustand der Daten verändert sich während des Betriebes der Datenbank laufend. Dabei kann sich der Datenzustand allmählich verschlechtern. Es wird daher auch vorgeschlagen, dass zumindest ein harter und zumindest ein weicher Zustandsschwellwert eingestellt wird. Bei Erreichen des weichen Zustandsschwellwertes ist eine Wartung der Daten mit Hilfe der geeigneten Wartungsfunktion nicht unbedingt angezeigt, wäre jedoch sinnvoll. Somit kann eine Wartung noch von weiteren Kriterien abhängig gemacht werden, wie bspw. die aktuelle Systemauslastung, der Größe der Data Sets, der Zustand anderer Daten oder die aktuelle Zeit. Andererseits kann bei Erreichen des harten Zustandsschwellwertes eine Wartung der Daten nicht mehr aufgeschoben werden, da ansonsten massive Datenfehler, hohe Zugriffszeiten oder Datenverlust drohen. In diesem Fall soll die Wartung unmittelbar, bedingungslos aktiviert werden.

Es ist auch denkbar, dass die unmittelbare Ausführung der Wartungsfunktionen durch anwendungsspezifische Vorgaben oder anderer Anforderungen an die Datenbank unterbunden werden sollte. Daher wird vorgeschlagen, dass Restriktionen bestimmbar sind, zu denen die unmittelbare Aktivierung der Wartungsfunktionen verhindert wird. In diesem Fall wird die Wartungsfunktion vorzugsweise unmittelbar nach Wegfall der Restriktionen ausgeführt.

Gemäß einer bevorzugten Ausführung kann der unmittelbar erstellte Befehl zur Aktivierung der Wartungsfunktion die direkte Ausführung der Funktion bewirken (Übergabe an JES, Job Entry System). Auch kann der Befehl an einen Job Scheduler übergeben werden. Dies ist insbesondere dann sinnvoll, wenn Wartungen nach dem herkömmlichen Prinzip durchgeführt werden sollen. Die Wartung wird dann vom Job Scheduler durchgeführt und überwacht. Dabei ist es jedoch möglich, bei der Übergabe des Befehls an den Job Schelduler, diesen anzuweisen, den Befehl unmittelbar auszuführen. Dann wird die Ausführung nicht durch den Job Scheduler anhand der dort vorliegenden Bestimmungen ausgelöst, jedoch vom Job Scheduler überwacht. Schliesslich ist es auch möglich, den Befehl an eine Datenbankprozedur unmittelbar zu übergeben. Dies ist im Fall der DB2 der Aufruf der DB2 Stored Procedure DSNUTILS.

Durch eine Protokollierung der Wartungsfunktionen können anstehende, zur Zeit laufende und in der Vergangenheit ausgeführte Wartungsfunktionen überwacht werden. Der Wartungszustand der Datenbank ist ermittelbar. Ausserdem kann bei einem Fehler bei der Wartung ermittelt werden, welche Funktion fehlerhaft war und diese erneut aktiviert oder terminiert werden.

Ein weiterer Gegenstand der Erfindung ist eine Vorrichtung zum Ausführen eines vorher beschriebenen Verfahrens, mit einer Datenbankeinheit zum Betreiben einer relationalen Datenbank, wobei die Datenbankeinheit Wartungsmittel zum Ausführen von Wartungsfunktionen aufweist und Überwachungsmittel zum Überwachen und Ausgeben von Zustandsdaten über Zustände von in der Datenbankeinheit gespeicherten Datenbankinhalten aufweist, mit einer Überwachungseinheit zum Überwachen der ausgegebenen Zustandsdaten, wobei die Überwachungseinheit Mittel zum Analysieren der Zustandsdaten und zum Vergleichen der Zustandsdaten mit Vergleichsdaten aufweist und wobei die Überwachungseinheit Ausgabemittel zum unmittelbaren Ausgeben eines Aktivierungsbefehls für die Aktivierung der Wartungsmittel zum Durchführen einer Wartungsfunktion aufweist.

Die Erfindung betrifft darüber hinaus auch ein Computerprogramm mit einer Implementierung eines vorher beschriebenen Verfahrens für einem Computer und auch ein Computerprogrammprodukt mit einem solchen Computerprogramm oder mit Anweisungen zur Durchführung eines vorher beschriebenen Verfahrens.

Die Erfindung wird nachfolgend anhand einer ein Ausführungsbeispiel zeigenden Zeichnung näher erläutert. In der Zeichnung zeigt die einzige Figur:

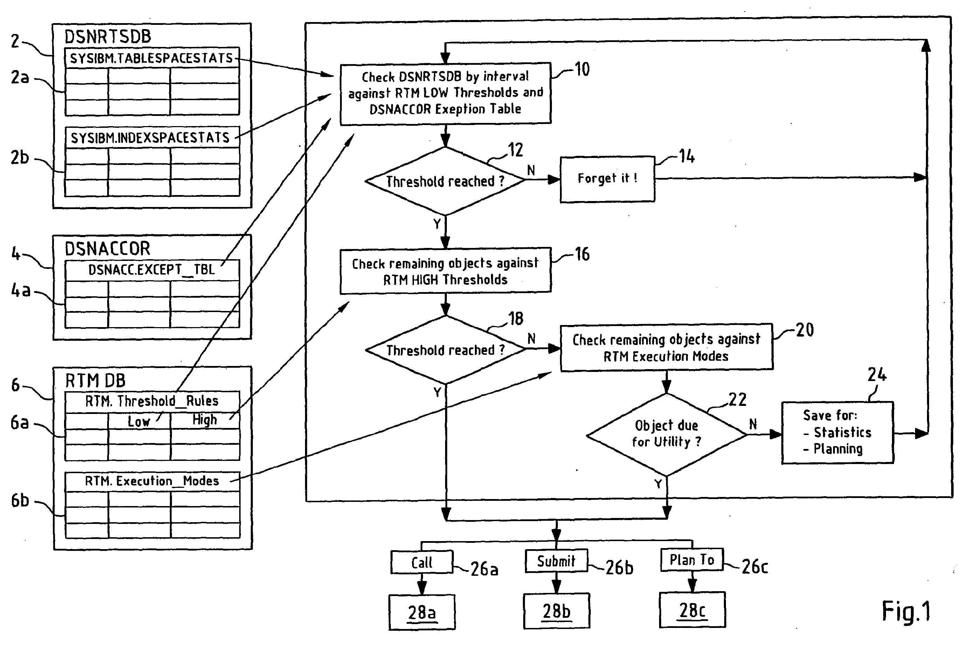

- Fig. 1: ein Ablaufdiagramm eines erfindungsgemäßen Verfahrens.

Dargestellt ist ein Ablaufdiagramm eines erfindungsgemäßen Verfahrens. Im Weiteren wird auf die Bezeichnungen innerhalb der DB2 von IBM zurückgegriffen. Die Erfindung ist jedoch für jede relationale Datenbank anwendbar.

Zur Durchführung des Verfahrens wird auf Datensätze 2, 4 und 6 zurückgegriffen. Der Datensatz 2 (DSNRTSDB) enthält die von der datenbankintegrierten Funktion Real Time Statistics (RTS) ausgegebenen Zustandsdaten. Diese Zustandsdaten werden in bestimmbaren Zeitintervallen, vorzugsweise halbstündlich, ausgegeben. DSNRTSDB 2 enthält zwei Tabellen SYSIBM.TABLESPACESTATS 2a und SYSIBM.INDEXSPACESTATS 2b. Diese Tabellen 2a, 2b enthalten die Zustände der Data Sets, die Tabellen speichern, und die Zustände der Data Sets, die Indizes speichern. Die in DSNRTSDB 2 enthaltenen Daten sind mit Hilfe von SQL-Abfragen zugänglich. Die enthaltenen Daten sind insbesondere die Informationen über:
- Die Grösse der einzelnen Data Sets;
- Änderungen an den Data Sets seit dem letztem COPY;
- Änderungen an den Data Sets seit dem letztem REORG;
- Änderungen an den Data Sets seit dem letztem RUNSTATS.

Die datenbankintegrierte Funktion RTS beansprucht nur wenige Ressourcen und die Datenbankleistung leidet nicht unter dem stetigen Bereitstellen der Zustandsdaten in den RTS Tabellen.

Der Datensatz 4 (DSNACCOR) enthält eine Tabelle 4a (DSNACC.EXCEPT_TBL) die anwendungsspezifische und datenbankspezifische Ausnahmen enthält. Diese Ausnahmen können sich auf Restriktionen bezüglich der Ausführung der Wartungsfunktionen beziehen. Die Tabelle DSNACC.EXCEPT_TBL 4a enthält sowohl bezüglich einzelner Werkzeuge als auch bezüglich bestimmter Data Sets Restriktionen. Diese Restriktionen müssen bei der Aktivierung der Wartungsfunktionen berücksichtigt werden und können so eventuell das unmittelbare Auslösen der Wartungsfunktionen beeinflussen.

Schliesslich enthält der Datensatz 6 (RTM DB) zwei Tabellen 6a und 6b. Die Tabelle 6a (RTM.Threshold_Rules) enthält Vergleichswerte, die für einen Vergleich zwischen einem Zustand einzelner Data Sets mit Sollzuständen dienen. Die Schwellwerte sind dabei in harte Schwellwerte und weiche Schwellwerte unterteilt. Das Erreichen eines harten Schwellwertes bewirkt das unmittelbare, bedingungslose Aktivieren eines Werkzeuges zur Wartung eines Data Sets, wohingegen bei einem weichen Schwellwert noch weitere Bedingungen berücksichtigt werden können.

Der Ablauf des Verfahrens lässt sich wie folgt beschreiben:

Beim erstmaligen Einschalten ist die Funktion RTS nicht initialisiert. Das bedeutet, das Zustandsinformationen über COPY, REORG und RUNSTATS erst durch die RTS erfasst und externalisiert werden, wenn diese Werkzeuge bei eingeschaltetem RTS auf dem jeweiligen Data Set ausgeführt worden sind. In diesem Fall wird in der Ausgabe des RTS ein Tabelleneintrag für dieses Data Set initialisiert und bei den nächsten Ausgaben berücksichtigt.

Zur Initialisierung ist es daher möglich, den Zustand der einzelnen Data Sets, während des Betriebes bei eingeschaltetem RTS, mit Hilfe herkömmlicher, externer Überwachungsfunktionen zu ermitteln. Wird durch die externen Überwachungsfunktionen ein Bedarf für die Ausführung eines Werkzeuges festgestellt, wird die Ausführung dieses Werkzeuges nach herkömmlichen Methoden veranlasst. Nach Ausführung des Werkzeuges auf dem jeweiligen Data Set ist die RTS hierfür initialisiert und Zustandsveränderungen werden durch RTS erfasst und fortgeschrieben. Die externen Überwachungsfunktionen müssen dieses Data Set nicht mehr überwachen. Die externe Überwachung wird solange für die verbleibenden Data Sets fortgesetzt, bis alle Data Sets in der RTS initialisiert sind. Zukünftige Entscheidungen bezüglich des Data Sets und des Werkzeuges werden dann mit Hilfe der nachfolgend beschriebenen Methode getroffen.

Zunächst werden im Schritt 10 die Zustandsdaten der Data Sets aus der DSNRTSDB 2 gelesen. Darüber hinaus werden die Schwellwerte aus RTM DB 6 und die Restriktionen aus DSNACCOR 4 ermittelt.

Im Schritt 12 werden die Zustandsdaten mit den weichen Schwellwerten der RTM DB 4 verglichen. Wenn ein Zustand eines Data Sets diesen Schwellwert erreicht hat, wird die durchzuführende Wartungsaktion ermittelt. Danach wird überprüft, ob der Wartung dieses Data Sets mit der ausgewählten Wartungsfunktion eine Restriktion aus dem Datensatz DSNACCOR 4 entgegensteht.

Falls der Schwellwert nicht erreicht wird oder eine Restriktion vorliegt, wird im Schritt 14 die Überwachung der Zustände erneut aktiviert.

Im Schritt 16 werden die harten Schwellwerte aus RTM DB 6 ermittelt.

Im Schritt 18 wird überprüft, ob ein harter Schwellwert durch den ermittelten Zustand des jeweiligen Data Sets erreicht wurde. Ist dies der Fall, wird unmittelbar eine Aktivierung 26 der notwendigen Wartungsfunktion durchgeführt. Liegt der harte Schwellwert nicht vor, befindet sich der Zustand des Data Sets zwischen dem weichen und dem harten Schwellwert.

Daraufhin werden in Schritt 20 weitere einstellbare Restriktionen aus RTM.Execution_Modes 6b ermittelt.

Im Schritt 22 wird entschieden, ob der Wartung des jeweiligen Data Sets mit dem vorgesehen Werkzeug eine solche Restriktion entgegensteht. Ist dies der Fall, wird in Schritt 24 die Überwachung der Zustände erneut aktiviert und die ermittelten Daten werden für weitere Planung und Statistiken gespeichert.

Liegen keine weiteren Restriktionen vor, wird die Aktivierung 26 der Werkzeuge durchgeführt. Hierbei werden Stapelaufträge für die Wartungswerkzeuge, die der Utility JCL unterliegen, erstellt, wobei die Informationen über den Zustand des zu wartenden Data Sets verwendet werden. Der erstellte Befehl wird in Schritt 26a durch Aufruf der DB2 Stored Procedure DSNUTILS 28a aktiviert. Im Schritt 26b wird der Befehl unmittelbar durch Übergabe an JES 28b aktiviert und in Schritt 26c wird der Befehl dynamisch an den Job Scheduler 28c übergeben. Welcher der Schritte 26 eingeleitet wird, ist einstellbar. Die unmittelbare Ausführung des Werkzeuges sollte jedoch bei jedem der drei Möglichkeiten gewährleistet sein.

Durch die laufende Überwachung und Wartung der Data Sets, wie es erfindungsgemäß vorgeschlagen wird, kann der Wartungszustand der Data Sets einer Datenbank optimiert werden, ohne dass die Systemleistung der Datenbank wesentlich verringert wird. Insbesondere durch das Ausnutzen der datenbankintegrierten Zustandsüberwachung (RTS) kann mit wenig Aufwand der Zustand der Data Sets überwacht und bei Bedarf gewartet werden.

## Patentansprüche

1. Verfahren zur zeitnahen Wartung von Datenbankinhalten, insbesondere von Dateien, einer relationalen Datenbank, insbesondere DB2,
- bei welchem mit Hilfe einer datenbankintegrierten Zustandsüberwachung Zustände der Datenbankinhalte erfasst werden,
- bei welchem Zustandsdaten der erfassten Zustände mit Hilfe der datenbankintegrierten Zustandsüberwachung zeitnah ausgegeben werden,
- bei welchem die ausgegebenen Zustandsdaten analysiert und mit Vergleichsdaten verglichen werden und
- bei welchem Wartungsfunktionen im Wesentlichen unmittelbar nach einem positiven Vergleichsergebnis aktiviert werden.

2. Verfahren nach Anspruch 1, **dadurch gekennzeichnet, dass** der Vergleich der Zustandsdaten mit Zustandsschwellwerten durchgeführt wird, wobei die Zustandsschwellwerte Datenzustände repräsentieren, bei denen eine Ausführung der Wartungsfunktionen für die jeweiligen Datenbankinhalte angezeigt ist.

3. Verfahren nach Anspruch 2, **dadurch gekennzeichnet, dass** die Zustandsschwellwerte für unterschiedliche Datenbankinhalte und/oder Gruppen von Datenbankinhalten und/oder verschiedene Wartungsfunktionen jeweils eingestellt werden.

4. Verfahren nach einem der Ansprüche 2 oder 3, **dadurch gekennzeichnet, dass** zumindest ein harter Zustandsschwellwert eingestellt wird, dass zumindest ein weicher Zustandsschwellwert eingestellt wird, dass beim Erreichen des weichen Zustandsschwellwertes die Wartungsfunktion beim Vorliegen weiterer Kriterien aktiviert wird und dass beim Erreichen des harten Zustandsschwellwertes die Wartungsfunktion unmittelbar aktiviert wird.

5. Verfahren nach einem der Ansprüche 1 bis 4, **dadurch gekennzeichnet, dass** Restriktionen für die Ausführung von Wartungsfunktionen system-, zeit-, daten- und/oder anwendungsbezogen festgelegt werden, wodurch ein unmittelbares Ausführen einer Wartungsfunktion zumindest zeitweise unterbunden wird.

6. Verfahren nach einem der Ansprüche 1 bis 5, **dadurch gekennzeichnet, dass** die unmittelbare Aktivierung der Wartungsfunktionen eine direkte Ausführung, ihre Übergabe an einen Job Scheduler oder einen Aufruf von Datenbankprozeduren bewirkt.

7. Verfahren nach einem der Ansprüche 1 bis 6, **dadurch gekennzeichnet, dass** die durchgeführten Wartungsfunktionen protokolliert werden und ein Wartungsprotokoll ausgegeben wird.

8. Vorrichtung eingerichtet zum Ausführen eines Verfahrens nach Anspruch 1,
- mit einer Datenbankeinheit zum Betreiben einer relationalen Datenbank,
- wobei die Datenbankeinheit Wartungsmittel zum Ausführen von Wartungsfunktionen aufweist und
- Überwachungsmittel zum Überwachen und Ausgeben von Zustandsdaten über Zustände von in der Datenbankeinheit gespeicherten Datenbankinhalten aufweist,
- mit einer Überwachungseinheit zum Überwachen der ausgegebenen Zustandsdaten,
- wobei die Überwachungseinheit Mittel zum Analysieren der Zustandsdaten und zum Vergleichen der Zustandsdaten mit Vergleichsdaten aufweist und
- wobei die Überwachungseinheit Ausgabemittel zum unmittelbaren Ausgeben eines Aktivierungsbefehls für die Aktivierung der Wartungsmittel zum Durchführen einer Wartungsfunktion aufweist.

9. Computerprogramm mit einer Implementierung eines Verfahrens nach einem der Ansprüche 1 bis 8 für einen Computer.

10. Computerprogrammprodukt mit einem Computerprogramm nach Anspruch 9 oder mit Anweisungen zur Durchführung eines Verfahrens nach einem der Ansprüche 1 bis 8.
